# FASCICULE DE BREVET EUROPEEN

(11) **EP 1 862 774 B1**
(45) Date de publication et mention de la délivrance du brevet: **29.07.2015**
(21) Numéro de dépôt: 06360024.1
(22) Date de dépôt: 31.05.2006
(51) Int. Cl.: G01D 5/347

(54) **Optical multiturn rotational encoder**
Optischer Rotationsgeber für Mehrfachumdrehungen
Codeur optique de rotation multitour

(43) Date de publication de la demande: 05.12.2007
(73) Titulaire: Delphi Technologies, Inc., Troy, Michigan 48007 (US); UNIVERSITE LOUIS PASTEUR, 67000 Strasbourg (FR)
(72) Inventeur: Tupinier, Laurent, 67116 Reichstett (FR); Ndao, Mandiaye, 67000 Strasbourg (FR); Marroux, Olivier, 49000 Angers (FR); Kress, Bernard, 67350 Neubourg (FR)
(74) Mandataire: Delphi France SAS

(56) Documents cités:
- DE-A1- 19 855 064
- JP-A- 1 280 215
- JP-A- 57 203 902

## Description

La présente invention concerne un compte-tour optique associé à un disque rotatif d'un capteur angulaire doté de moyens de codage de la position angulaire du disque.

Le problème posé est le suivant : dans un certain nombre d'applications, par exemple la gestion de la rotation d'une colonne de direction d'un véhicule automobile, il est nécessaire de pouvoir coder de manière absolue sur plusieurs tours (aux environs de 5) la position du volant. Or, lorsqu'on utilise des capteurs angulaires qui ne fournissent de codage absolu de la position angulaire que sur un tour, il reste à coder le tour dans lequel on se situe. Il ne doit pas s'agir d'un simple compte-tour incrémental, car la position précise du volant doit être identifiée précisément même au démarrage. Il est par conséquent absolument nécessaire de coder le tour en plus du codage sur 360°.

Les solutions utilisées jusqu'ici font appel par exemple à des technologies magnétiques, associées à des solutions mécaniques à engrenage. Les configurations utilisées sont en général excentrées par rapport à la colonne de direction, et doivent être conçues de manière à présenter un encombrement réduit car le volume sous volant disponible est peu important. Il y a donc nécessité d'employer des jeux d'engrenages réducteurs, et par conséquent d'utiliser des systèmes mécaniques requérant une certaine précision, plus onéreux à la fabrication voire au montage.

La présente invention se propose de remédier à cet inconvénient en utilisant une solution optique associée à un mécanisme de comptage.

Le compte-tour optique de l'invention, associé comme mentionné ci-dessus à un disque rotatif d'un capteur angulaire doté de moyens de codage de la position angulaire du disque, se caractérise à titre principal en ce qu'il comporte au moins une source de lumière cohérente fixe émettant un faisceau lumineux, un diaphragme et un support mis en mouvement par la rotation du disque de codage, ledit support comportant, sur sa face en regard du faisceau incident, au moins une cellule de codage de son déplacement orientée selon la direction dudit déplacement et générant un code optique par interférence avec le faisceau de lumière incident, ledit code optique étant lisible après interférence sur au moins un photodétecteur.

En fait, la rotation du disque provoque un déplacement d'amplitude contrôlée du support, lequel comporte des moyens de codage de sa position permettant une mise en correspondance bijective avec le tour effectivement parcouru par le disque rotatif.

Selon une possibilité, la ou les cellule(s) de codage est (sont) dotées d'un hologramme généré par ordinateur diffractant le faisceau incident en un code optique numérique.

Alternativement, ledit support peut comporter plusieurs cellules de codage présentant chacune un réseau à motif spécifique.

Selon une version de l'invention, le support comporte en fait un nombre de cellules correspondant au nombre de tours à coder, chaque cellule étant couverte par un hologramme ou réseau spécifique générant un codage optique correspondant à un tour du disque, la dimension d'une cellule de codage permettant un balayage par le faisceau incident durant une rotation complète du disque.

Cette configuration permet d'affecter un code particulier à chaque tour du disque.

Selon une variante, le support peut comporter une unique cellule de codage dotée d'un hologramme diffractant le faisceau de lumière incident en un code optique composé de taches alignées, ledit hologramme comportant une modulation, sous forme d'une ou plusieurs rayures identiques disposées parallèlement, qui module le signal diffracté en changeant l'orientation de la ligne de taches selon la position relative du faisceau incident et de l'hologramme, ladite ligne étant toujours perpendiculaire à la tangente à la ou aux rayures, la position du centre de la tache diffractive d'ordre 0 restant inchangée, la ou lesdites rayures étant orientée(s) dans la cellule de telle sorte qu'une modification axiale de la position relative du faisceau de lumière incidente et de l'hologramme modifie l'orientation de la ligne de taches, un photodétecteur étant disposé de manière à correspondre au déplacement d'une tache de diffraction.

Dans ce cas, il n'y a qu'un hologramme dans une seule cellule de codage, mais avec un codage fin de la position axiale qui permet de faire correspondre de manière bijective un tour du disque rotatif avec un ensemble de positions.

De préférence, le photodétecteur est agencé en vue de correspondre au déplacement d'une tache d'ordre au moins égal à 1 en valeur absolue.

La détection du déplacement d'une telle tache est beaucoup plus facile que celle de la tache d'ordre 0, qui tourne sur elle-même par rapport à l'axe optique.

Selon une possibilité, la ou les rayure(s) parcourant les hologrammes est (sont) un (des) arc(s) de cercle dont le(s) rayon(s) est (sont) orienté(s) sensiblement perpendiculairement au déplacement du support de la cellule de codage.

Dans cette hypothèse, le photodétecteur comporte des cellules de détection alignées dans la direction du déplacement du support. Les taches lumineuses se déplacent en arc de cercle en même temps que les normales aux rayures en arc de cercle, déplacement en fait assimilé à un mouvement rectiligne du fait de son amplitude limitée.

Selon une possibilité, le diaphragme situé sur le trajet du faisceau incident consiste en une fente disposée radialement par rapport au disque rotatif, et dont au moins une portion d'extrémité est disposée en regard de la face comprenant la ou les cellules de codage axial.

Il est possible d'optimiser la conception de l'ensemble du système, incluant le ' capteur angulaire, sachant que le codage angulaire peut être réalisé au moyen d'une piste circulaire de cellules de codage angulaire, en faisant alors en sorte que la fente du diaphragme de collimation orienté radialement s'étende de manière à ce que l'autre portion d'extrémité soit située en regard desdites cellules de codage angulaire.

Dans ce cas, un unique diaphragme sert à délimiter le faisceau incident vers les différents moyens de codage.

Selon l'agencement relatif des différents composants du système, la source de lumière cohérente peut être unique. De préférence, cette source de lumière est en pratique une diode laser.

On peut cependant imaginer que, si la fente constituant le diaphragme est trop allongée, un composant diviseur sépare le faisceau issu de la diode laser en deux faisceaux dirigés respectivement vers les moyens de codage angulaire du disque et les moyens de codage du déplacement du support.

Selon une possibilité, le support peut être une réglette actionnée en translation par un mécanisme à engrenage ou à came.

Alternativement, il peut évidemment aussi s'agir d'un disque secondaire, d'un secteur angulaire, etc...

Comme on l'a mentionné auparavant, le disque rotatif du capteur angulaire est en fait, selon une application préférentielle, solidarisé à une colonne de direction de véhicule automobile.

L'invention va à présent être décrite plus en détails, en référence à l'unique figure qui montre, en élévation, un disque rotatif de capteur angulaire solidarisé à une colonne de direction, et muni d'une réglette pour la réalisation du compte-tour optique de l'invention.

En référence à la figure, ledit compte-tour est associé à un disque (1) rotatif solidarisé à une colonne de direction (2). Ce disque comporte une piste (3) couverte de cellules de codage angulaire modulant un faisceau de lumière cohérente incidente (4), collimaté par un diaphragme (5).

Une réglette (6) est actionnée en translation, par un système mécanique (non représenté) lorsque le disque (1) tourne. Il peut par exemple s'agir d'un engrenage solidarisé au disque et engrenant ave une bordure longitudinale dentée de la réglette. Celle-ci est, dans l'exemple illustré, munie d'une cellule de codage axiale (7) couverte d'un hologramme altéré par une modulation (8) sous forme de rayures multiples parallèles.

Un second faisceau de lumière cohérente (4'), également collimaté par le diaphragme (5), interfère avec la cellule de codage axial (7). Le code optique généré par ledit hologramme est un alignement de taches, modulé par la modulation (8). Ledit alignement change d'orientation selon la position relative du faisceau incident (4') collimaté et de la cellule de codage axial (7). Il est en effet toujours perpendiculaire à la tangente à la ou aux rayure(s). Seule la tache diffractive centrale d'ordre 0 est globalement inchangée, tournant autour de l'axe optique.

Un photodétecteur (non représenté) est disposé parallèlement à l'axe de la réglette (6). Sa localisation est choisie en fonction du positionnement d'une tache du code optique d'ordre supérieur ou égal à 1 en valeur absolue dont on choisit de coder le déplacement.

Cette tache est mobile, selon un arc de cercle en toute rigueur, mais qui peut être assimilé à un déplacement rectiligne à l'échelle de la cellule de codage axial (7). Le photodétecteur est orienté dans la direction du déplacement de ladite tache. Le codage du positionnement relatif du faisceau incident (4') collimaté et de la cellule de codage axial (7) se fait par lecture de la ou des cellule(s) de détection illuminée(s) du photodétecteur. Ces cellules de détection sont alignées, et celles qui sont activées correspondent bijectivement à une position relative précise faisceau (4') / cellule (7).

Une correspondance également bijective peut être établie entre un tour qu'effectue le disque (1) et le groupe de cellules de détection du photodétecteur illuminables au cours de ce tour.

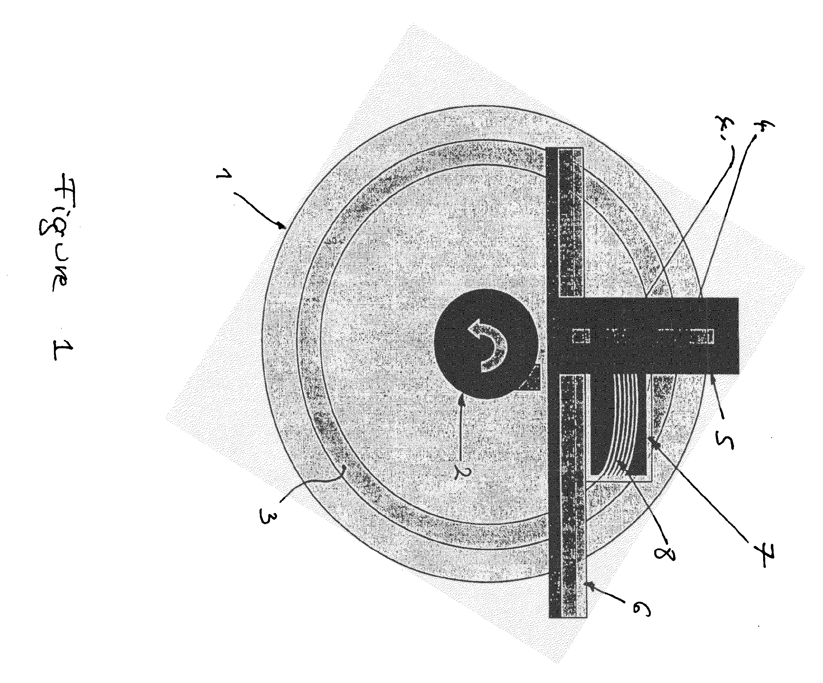

Il est donc possible, avec le compte-tour optique illustré dans la figure 1, de coder un parmi plusieurs tours parcouru par le disque (1).

On peut mettre en oeuvre simultanément le codage axial et le codage angulaire réalisé par interférence du faisceau lumineux (4) avec la piste (3), qui peut par exemple être munie de cellules de codage diffractives générant un codage absolu sur un tour. La distance entre la réglette (6) et la piste (3) peut justifier l'existence de deux faisceau incidents (4) et (4'). Ceux-ci peuvent néanmoins être issus d'une unique diode laser, moyennant l'existence d'un composant diviseur interposé entre ladite diode et le diaphragme (5) de collimation.

L'exemple illustré en figure 1 ne doit pas être considéré comme limitatif de l'invention, qui comporte également d'autres possibilités telles que mentionné ci-dessus : l'utilisation de plusieurs cellules de codage axial, la modification de la forme des rayures de modulation, un support autre qu'une réglette, etc.

## Revendications

1. Compte-tour optique associé à un disque rotatif d'un capteur angulaire doté de moyens de codage de la position angulaire du disque, **caractérisé en ce qu'**il comporte au moins une source de lumière cohérente fixe émettant un faisceau lumineux, un diaphragme et un support mis en mouvement par la rotation du disque de codage, ledit support comportant, sur sa face en regard du faisceau incident, au moins une cellule de codage de son déplacement orientée selon la direction dudit déplacement et générant un code optique par interférence avec le faisceau de lumière incident, ledit code optique étant lisible après interférence sur au moins un photodétecteur.

2. Compte-tour optique selon la revendication précédente, **caractérisé en ce que** la ou les cellules de codage est (sont) dotée(s) d'un hologramme généré par ordinateur diffractant le faisceau incident en un code optique numérique.

3. Compte-tour optique selon la revendication 1, **caractérisé en ce que** le support comporte plusieurs cellules de codage présentant chacune un réseau à motif spécifique.

4. Compte-tour optique selon l'une des revendications 2 et 3, **caractérisé en ce que** le support comporte un nombre de cellules de codage correspondant au nombre de tours à coder, chaque cellule étant couverte par un hologramme ou un réseau spécifique générant un codage optique correspondant à un tour du disque, la dimension d'une cellule de codage permettant un balayage par le faisceau incident durant une rotation complète du disque.

5. Compte-tour optique selon la revendication 1, **caractérisé en ce que** le support comporte une unique cellule de codage dotée d'un hologramme diffractant le faisceau de lumière incidente en un code optique composé de taches alignées, ledit hologramme comportant une modulation, sous forme d'une ou plusieurs rayures identiques disposées parallèlement, qui module le signal diffracté en changeant l'orientation de la ligne de taches selon la position relative du faisceau incident et de l'hologramme, ladite ligne étant toujours perpendiculaire à la tangente à la ou aux rayures, la position du centre de la tache diffractive d'ordre 0 restant inchangée, la ou lesdites rayures étant orientée(s) dans la cellule de telle sorte qu'une modification axiale de la position relative du faisceau de lumière incidente et de l'hologramme modifie l'orientation de la ligne de taches, un photodétecteur étant disposé de manière à correspondre au déplacement d'une tache de diffraction.

6. Compte-tour optique selon la revendication précédente, **caractérisé en ce que** le photodétecteur est agencé en vue de correspondre au déplacement d'une tache d'ordre au moins égal à 1 en valeur absolue.

7. Compte-tour optique selon l'une des revendications 5 et 6, **caractérisé en ce que** la ou les rayures parcourant les hologrammes est (sont) un (des) arc(s) de cercle dont le(s) rayon(s) est (sont) orienté(s) sensiblement perpendiculairement à la direction de déplacement du support de la cellule de codage.

8. Compte-tour optique selon la revendication précédente, **caractérisé en ce que** le photodétecteur comporte des cellules de détection alignées dans la direction du déplacement du support.

9. Compte-tour optique selon l'une quelconque des revendications précédentes, **caractérisé en ce que** le diaphragme placé sur le trajet du faisceau incident consiste en une fente disposée radialement par rapport au disque rotatif, et dont au moins une portion d'extrémité est disposée en regard de la face comprenant la ou les cellules de codage.

10. Compte-tour optique selon la revendication précédente, **caractérisé en ce que** le codage angulaire est réalisé au moyen d'une piste circulaire de cellules de codage angulaire, la fente du diaphragme de collimation orienté radialement s'étendant de manière à ce que l'autre portion d'extrémité de la fente soit située en regard desdites cellules de codage angulaire.

11. Compte-tour optique selon l'une quelconque des revendications précédentes, **caractérisé en ce que** la source de lumière cohérente est unique.

12. Compte-tour optique selon la revendication précédente, **caractérisé en ce que** la source de lumière cohérente est une diode laser.

13. Compte-tour optique selon la revendication précédente, **caractérisé en ce qu'**un composant diviseur sépare le faisceau issu de la diode laser en deux faisceaux dirigés respectivement vers les moyens de codage angulaire du disque et les moyens de codage du déplacement du support.

14. Compte-tour optique selon la revendication précédente, caractérisé en ce le support est une réglette actionnée en translation par un mécanisme à engrenage ou à came.

15. Compte-tour optique selon l'une quelconque des revendications précédentes, **caractérisés en ce que** le disque rotatif du capteur angulaire est solidarisé à une colonne de direction de véhicule automobile.

## Patentansprüche

1. Optischer Drehzahlmesser, der einer drehbaren Scheibe eines Winkelsensors zugeordnet ist, der mit Mitteln zum Codieren der Winkelstellung der Scheibe versehen ist, **dadurch gekennzeichnet, dass** er zumindest eine feste, kohärente Lichtquelle aufweist, die einen Lichtstrahl ausgibt, sowie eine Blende und einen Träger, der durch die Drehung der Codierungsscheibe in Bewegung gesetzt wird, wobei der Träger auf seiner dem einfallenden Lichtstrahl gegenüberliegenden Seite zumindest eine Codierungszelle zum Codieren seiner Verlagerung aufweist, die in Richtung der Verlagerung ausgerichtet ist und einen optischen Code durch Interferenz mit dem einfallenden Lichtstrahl erzeugt, wobei der optische Code nach Interferenz auf zumindest einem Fotodetektor lesbar ist.

2. Optischer Drehzahlmesser nach dem vorangehenden Anspruch, **dadurch gekennzeichnet, dass** die Codierungszelle bzw. Codierungszellen mit einem Hologramm versehen ist bzw. sind, das von einem Computer erzeugt wird, der den einfallenden Lichtstrahl zu einem digitalen optischen Code beugt.

3. Optischer Drehzahlmesser nach Anspruch 1, **dadurch gekennzeichnet, dass** der Träger mehrere Codierungszellen aufweist, die jeweils ein Netz mit spezifischem Muster aufweisen.

4. Optischer Drehzahlmesser nach einem der Ansprüche 2 und 3, **dadurch gekennzeichnet, dass** der Träger eine Anzahl von Codierungszellen aufweist, die der zu codierenden Anzahl an Umdrehungen entspricht, wobei jede Zelle von einem Hologramm oder einem spezifischen Netz überdeckt wird, das eine optische Codierung erzeugt, die einer Umdrehung der Scheibe entspricht, wobei die Abmessung einer Codierungszelle ein Abtasten durch den einfallenden Lichtstrahl während einer vollständigen Drehung der Scheibe gestattet.

5. Optischer Drehzahlmesser nach Anspruch 1, **dadurch gekennzeichnet, dass** der Träger eine einzige Codierungszelle aufweist, die mit einem Hologramm versehen ist, das den einfallenden Lichtstrahl zu einem optischen Code beugt, der auch fluchtenden Flecken besteht, wobei das Hologramm eine Modulation in Form von einem oder mehreren parallel verlaufenden, identischen Streifen aufweist, mit welcher das gebeugte Signal moduliert wird, indem die Ausrichtung der Linie von Flecken je nach relativer Position von einfallendem Lichtstrahl und Hologramm geändert wird, wobei die Linie stets senkrecht zur Tangente zu dem bzw. den Streifen verläuft, wobei die Position des Zentrums des diffraktiven Flecks der Ordnung 0 unverändert bleibt, wobei der bzw. die Streifen in der Zelle derart ausgerichtet ist/sind, dass eine axiale Änderung der relativen Position des einfallenden Lichtstrahls und des Hologramms die Ausrichtung der Linie von Flecken verändert, wobei ein Fotodetektor so angeordnet ist, dass er der Verlagerung eines Diffraktionsflecks entspricht.

6. Optischer Drehzahlmesser nach dem vorangehenden Anspruch, **dadurch gekennzeichnet, dass** der Fotodetektor so angeordnet ist, dass er der Verlagerung eines Flecks der Ordnung zumindest gleich 1 im absoluten Wert entspricht.

7. Optischer Drehzahlmesser nach einem der Ansprüche 5 und 6, **dadurch gekennzeichnet, dass** der bzw. die Streifen, der bzw. die die Hologramme durchlaufen, ein Kreisbogen ist bzw. Kreisbögen sind, dessen Radius bzw. deren Radien im Wesentlichen senkrecht zur Verlagerungsrichtung des Trägers der Codierungszelle ausgerichtet ist bzw. sind.

8. Optischer Drehzahlmesser nach dem vorangehenden Anspruch, **dadurch gekennzeichnet, dass** der Fotodetektor Detektionszellen aufweist, die in Richtung der Verlagerung des Trägers fluchten.

9. Optischer Drehzahlmesser nach einem der vorangehenden Ansprüche, **dadurch gekennzeichnet, dass** die Blende, die auf der Wegstrecke des einfallenden Lichtstrahls positioniert ist, aus einem Schlitz besteht, der radial zur drehbaren Scheibe angeordnet ist und von dem zumindest ein Endabschnitt der Seite gegenüberliegend angeordnet ist, welche die Codierungszelle bzw. Codierungszellen aufweist.

10. Optischer Drehzahlmesser nach dem vorangehenden Anspruch, **dadurch gekennzeichnet, dass** die Winkelcodierung mittels einer kreisförmigen Bahn von Codierungszellen zur Winkelcodierung erfolgt, wobei der Schlitz der radial ausgerichteten Kollimatorblende sich so erstreckt, dass der andere Endabschnitt des Schlitzes den Codierungszellen zur Winkelcodierung gegenüberliegt.

11. Optischer Drehzahlmesser nach einem der vorangehenden Ansprüche, **dadurch gekennzeichnet, dass** die kohärente Lichtquelle einzig ist.

12. Optischer Drehzahlmesser nach dem vorangehenden Anspruch, **dadurch gekennzeichnet, dass** die kohärente Lichtquelle eine Laserdiode ist.

13. Optischer Drehzahlmesser nach dem vorangehenden Anspruch, **dadurch gekennzeichnet, dass** ein strahlteilendes Bauelement den von der Laserdiode stammenden Strahl in zwei Strahlen teilt, die zu den Codierungsmitteln zur Winkelcodierung der Scheibe bzw. zu den Codierungsmitteln zum Codieren der Verlagerung des Trägers gerichtet sind.

14. Optischer Drehzahlmesser nach dem vorangehenden Anspruch, **dadurch gekennzeichnet, dass** der Träger eine Stellleiste ist, die über einen Getriebe- oder Kurvenmechanismus translatorisch betätigt wird.

15. Optischer Drehzahlmesser nach einem der vorangehenden Ansprüche, **dadurch gekennzeichnet, dass** die drehbare Scheibe des Winkelsensors fest mit einer Lenksäule eines Kraftfahrzeugs verbunden ist.

## Claims

1. Optical revolution counter associated with a rotary disc of an angular sensor provided with means for encoding the angular position of the disc, **characterised in that** it comprises at least one fixed coherent light source emitting a light beam, a diaphragm and a support set in motion by the rotation of the encoding disc, said support comprising, on its face facing the incident beam, at least one cell for encoding its displacement oriented in the direction of said displacement and generating an optical code by interference with the incident light beam, said optical code being readable after interference on at least one photodetector.

2. Optical revolution counter according to the preceding claim, **characterised in that** the encoding cell or cells is/are provided with a computer-generated hologram diffracting the incident beam into a digital optical code.

3. Optical revolution counter according to claim 1, **characterised in that** the support comprises several encoding cells each having a specific grid with motif.

4. Optical revolution counter according to either of claims 2 and 3, **characterised in that** the support comprises a number of encoding cells corresponding to the number of revolutions to be encoded, each cell being covered by a hologram or a specific grid generating an optical code corresponding to one revolution of the disc, the dimensions of an encoding cell allowing scanning by the incident beam during one complete rotation of the disc.

5. Optical revolution counter according to claim 1, **characterised in that** the support comprises a single encoding cell provided with a hologram diffracting the incident light beam into an optical code composed of aligned spots, said hologram comprising a modulation, in the form of one or more identical stripes arranged in parallel, which modulates the diffracted signal by changing the orientation of the line of spots according to the relative position of the incident beam and the hologram, said line being always perpendicular to the tangent to the stripe or stripes, the position of the centre of the zero-order diffractive spot remaining unchanged, said stripe or stripes being oriented in the cell in such manner that an axial modification of the relative position of the incident light beam and the hologram modifies the orientation of the line of spots, a photodetector being arranged so as to correspond to the displacement of a diffractive spot.

6. Optical revolution counter according to the preceding claim, **characterised in that** the photodetector is arranged so as to correspond to the displacement of a spot having an order at least equal to 1 in absolute value.

7. Optical revolution counter according to either of claims 5 and 6, **characterised in that** the stripe or stripes crossing the holograms is/are circle arc(s) of which the radius/radii is/are oriented substantially perpendicularly to the direction of displacement of the support of the encoding cell.

8. Optical revolution counter according to the preceding claim, **characterised in that** the photodetector comprises detection cells aligned in the direction of displacement of the support.

9. Optical revolution counter according to any of the preceding claims, **characterised in that** the diaphragm placed in the path of the incident beam consists of a slit arranged radially relative to the rotary disc, and of which at least one end portion is arranged facing the face including the encoding cell or cells.

10. Optical revolution counter according to the preceding claim, **characterised in that** angular encoding is carried out by means of a circular track of angular encoding cells, the slit of the radially oriented collimating diaphragm extending in such manner that the other end portion of the slit is situated facing said angular encoding cells.

11. Optical revolution counter according to any of the preceding claims, **characterised in that** the coherent light source is a single source.

12. Optical revolution counter according to the preceding claim, **characterised in that** the coherent light source is a laser diode.

13. Optical revolution counter according to the preceding claim, **characterised in that** a divider component separates the beam emanating from the laser diode into two beams directed towards the means for angular encoding of the disc and the means for encoding the displacement of the support respectively.

14. Optical revolution counter according to the preceding claim, **characterised in that** the support is a strip driven translationally by a gear or cam mechanism.

15. Optical revolution counter according to any of the preceding claims, **characterised in that** the rotary disc of the angular sensor is fixed to an automobile vehicle steering column.
